# EUROPEAN PATENT APPLICATION

(11) **EP 1 900 999 A1**
(43) Date of publication of application: **19.03.2008**
(21) Application number: 07017943.7
(22) Date of filing: 13.09.2007
(51) Int. Cl.: F21V 8/00

(54) **Backlight assembly and display apparatus having the same**

(30) Priority: 13.09.2006 KR 20060088482
(71) Applicant: Samsung Electronics Co., Ltd., Yeongtong-gu Suwon-city, Gyeonggi-do 442-742 (KR)
(72) Inventor: Chung, Seung-Hwan, Gyeonggi-do (KR); Lee, Jeong-Hwan, Gyeonggi-do (KR); Kim, Seung-Mo, Chungcheongnam-do (KR); Jung, Jin-Mi, Seoul (KR)
(74) Representative: Weitzel, Wolfgang

(57) **Abstract**

A backlight assembly includes a light generating unit, a light guide plate guiding light supplied from the light generating unit, at least one optical sheet disposed over the light guide plate, and a protection sheet disposed over the optical sheet. The protection sheet includes a diffusion layer formed on a first side of the protection sheet facing the optical sheet. The diffusion layer has a thickness in a range from about 5µm to about 100µm. The protection sheet further includes a scratch prevention layer formed on a second side located opposite the first side. The scratch prevention layer has a thickness in a range from about 1µm to about 10µm.

## Description

### BACKGROUND OF THE INVENTION

### 1. Technical Field

The present disclosure relates to a backlight assembly and a display apparatus having the backlight assembly, and more particularly, to a backlight assembly including a protection sheet having a diffusion layer.

### 2. Discussion of the Related Art

A liquid crystal display (LCD) device is a type of flat panel display devices. The LCD device is thinner, lighter, and consumes less driving voltage and power as compared to other display devices. The LCD device displays an image using a liquid crystal layer.

Since the LCD device is not self-emissive, a backlight assembly is used to provide light to a liquid crystal display panel. The backlight assembly can include a light guide plate guiding light generated from a lamp toward the liquid crystal display panel, an optical sheet disposed on an upper side of the light guide plate, and a protection sheet disposed on an upper side of the optical sheet to protect the optical sheet.

However, since the protection sheet includes a diffusion sheet having a plurality of beads and the plurality of beads contact a lower side of the liquid crystal display panel, scratches may occur by friction generated between the lower side of the liquid crystal display panel and the diffusion sheet, thereby deteriorating display quality.

### SUMMARY OF THE INVENTION

Exemplary embodiments of the present invention provide a backlight assembly capable of preventing scratches caused by friction between a protection sheet and a display panel, and a display apparatus having the backlight assembly.

According to an exemplary embodiment of the present invention, a backlight assembly includes a light generating unit, a light guide plate, at least one optical sheet disposed over the light guide plate, and a protection sheet disposed over the optical sheet, The protection sheet may include a diffusion layer formed on a first side of the protection sheet facing the optical sheet.

The diffusion layer may have a thickness in a range from about 5µm to about 100µm. The diffusion layer may comprise a plurality of first beads to diffuse light and a first coating layer to fix the plurality of first beads. The diffusion layer may have a haze in a range from about 10% to about 90%.

The protection sheet may further include a scratch prevention layer formed on a second side located opposite the first side, The scratch prevention layer may have a thickness in a range from about 1µm to about 10µm. The scratch prevention layer may comprise a plurality of second beads to prevent an adhesion with the display panel and a second coating layer to fix the plurality of second beads. The plurality of second beads may have a diameter in a range from about 1µm to about 10µm. The second coating layer may comprise a silicon based compound,

The light guide plate may comprise a first prism pattern formed on a lower side of the light guide plate, The optical sheet may comprise a reverse prism sheet including a second prism pattern formed on a side facing the light guide plate.

According to an exemplary embodiment of the present invention, a backlight assembly comprises a light generating unit, a light guide plate, at least one optical sheet disposed over the light guide plate and a protection sheet disposed over the optical sheet. The protection sheet may comprise a diffusion layer formed on a first side facing the optical sheet, and a scratch prevention layer formed on a second side located opposite the first side. The diffusion layer may have a thickness in a range from about 5µm to about 100µm. The scratch prevention layer may have a thickness in a range from about 1µm to about 10µm.

According to an exemplary embodiment of the present invention, a display device comprises a display panel and a protection sheet disposed adjacent to the display panel. The protection sheet may comprise a first side adjacent to the display panel, a second side located opposite the first side, and a diffusion layer formed on the second side, the diffusion layer having a thickness in a range from about 5µm to about 100µm. The protection sheet may further comprise a scratch prevention layer having a thickness in a range from about 1µm to about 10µm and formed on the first side adjacent to the display panel to prevent an adhesion with the display panel. In addition, the display device may further comprise a reverse prism sheet disposed adjacent to the second side of the protection sheet on which the diffusion layer is formed. The reverse prism sheet may comprise a prism pattern formed on a fourth side located opposite the protection sheet.

According to exemplary embodiments of the present invention, scratches caused by friction generated between a display panel and a protection layer can be prevented, so that display quality can be Improved.

### BRIEF DESCRIPTION OF THE DRAWINGS

Exemplary embodiments of the present invention can be understood in more detail from the following descriptions taken in conjunction with the accompanying drawings, in which:
FIG. 1 is an exploded perspective view schematically showing a display apparatus according to an exemplary embodiment of the present invention;
FIG. 2 is a cross-sectional view showing a display apparatus according to an exemplary embodiment of the present invention;
FIG, 3 is a cross-sectional view showing a protection sheet according to an exemplary embodiment of the present invention; and
FIG. 4 is a cross-sectional view showing a protection sheet according to an exemplary embodiment of the present invention,

### DESCRIPTION OF EXEMPLARY EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein,

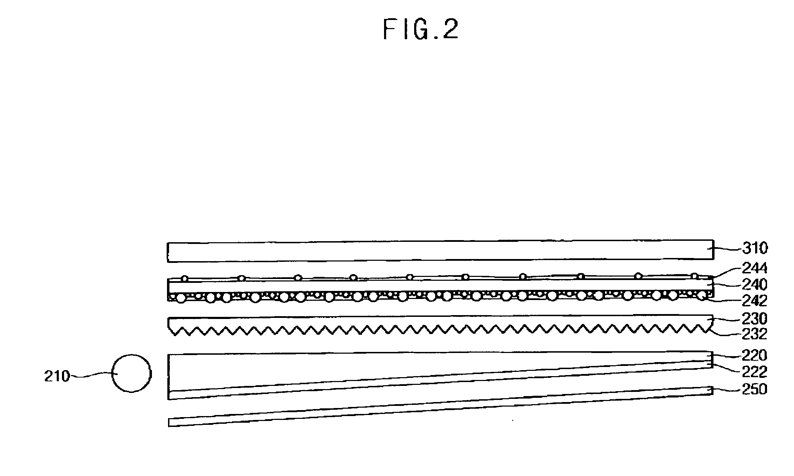

FIG, 1 is an exploded perspective view schematically showing a display apparatus according to an exemplary embodiment of the present invention. FIG. 2 is a cross-sectional view showing a display apparatus according to an exemplary embodiment of the present invention.

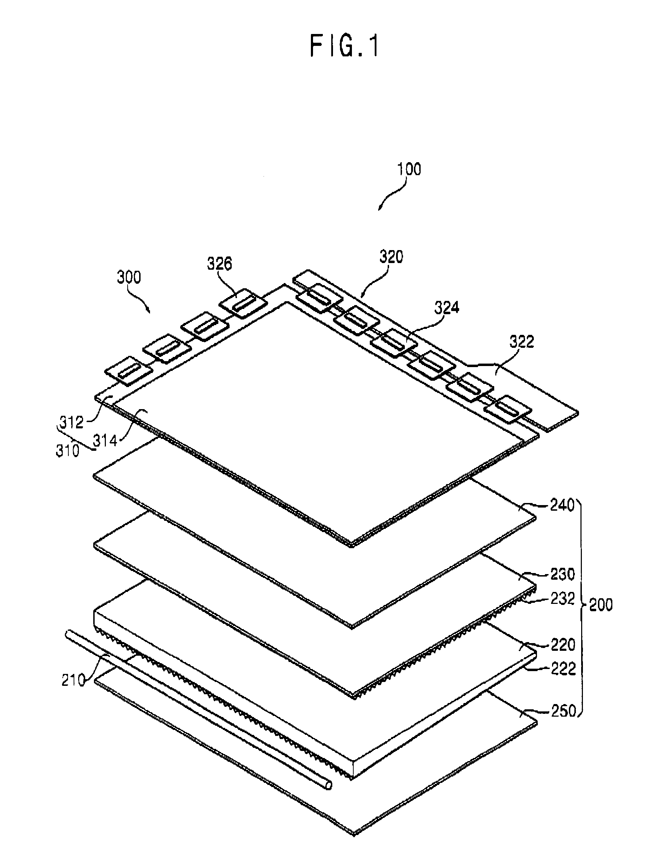

Referring to FIG. 1 and FIG, 2, a display apparatus includes a backlight assembly 200 supplying light and a display unit 300 displaying an image using the light supplied from the backlight assembly 200,

The backlight assembly 200 includes a light generating unit 210, a light guide plate 220 guiding light generated from the light generating unit 210 toward a display panel 310, an optical sheet 230 disposed on an upper side of the light guide plate 220, and a protection sheet 240 disposed on an upper side of the optical sheet 230.

The light generating unit 210 generates light in response to a driving power applied from an external inverter (not shown), The light generating unit 210 may include, for example, a Cold Cathode Fluorescent Lamp (CCFL) having a thin and long cylinder shape. The light generating unit 210 may include a plurality of Light Emitting Diodes (LEDs).

The light generating unit 210 can be disposed on a side surface of the light guide plate 220. In an embodiment, when the light generating unit 210 is used in a device, such as a laptop computer screen, in which a low brightness may be used, the light generating unit 210 may be disposed on one side of the light guide plate 220. When the light generating unit 210 is used in a device, such as a desktop computer monitor, in which a high brightness may be used, the light generating unit 210 may be disposed on two sides of the light guide plate 220, respectively.

The backlight assembly 200 may further include a lamp cover (not shown) covering three sides of the light generating unit 210 to protect the light generating unit 210. The lamp cover can improve efficiency of light by reflecting the light generated from the light generating unit 210 toward the light guide plate 220.

The light guide plate 220 guides light supplied from the light generating unit 210,disposed on a side of the light guide plate 220, toward the display panel 310. The light guide plate 220 converts a point light source or a line light source supplied from the light generating unit 210 into a plane light source corresponding to an area of the display panel 310,

The light guide plate 220 may include a transparent material to guide light. The transparent material may include, for example, polymethylmethacrylate (PMMA) or polycarbonate (PC).

When the light generating unit 210 is disposed at one side of the light guide plate 220, the light guide plate 220 may have a wedge shape, whose thickness gradually decreases as a distance from the light generating unit 210 increases.

Alternatively, when the light generating unit 210 is disposed at two sides of the light guide plate 220, respectively, the entire light guide plate 220 may have substantially the same thickness.

A first prism pattern 222 may be formed on a lower side of the light guide plate 220 to guide light supplied from the light generating unit 210 toward the display panel 310. For example, the first prism pattern 222 can be formed in a direction perpendicular to a length direction of the light generating unit 210. That is, the first prism pattern 222 extends in a direction perpendicular to a length direction of the light generating unit,

The light generated from the light generating unit 210 and received from a side of the light guide plate 220 is reflected by the first prism pattern 222, and moves upwardly.

The optical sheet 230 is disposed on an upper side of the light guide plate 220. The optical sheet 230 concentrates or diffuses the light exited from the light guide plate 220. In an embodiment, a lower side of the optical sheet 230 facing the light guide plate 220 may include a reverse prism sheet having a second prism pattern 232, The second prism pattern 232 can be formed in a direction perpendicular to the first prism pattern 222 of the light guide plate 220. For example, the second prism pattern 232 can be formed in a direction parallel with a length direction of the light generating unit 210. That is, the second prism pattern 232 extends in a direction parallel to a length direction of the light guiding unit 210.

Thus, a number of the optical sheets 230 can be decreased by using the light guide plate 220 having the first prism pattern 222 and the reverse prism sheet having the second prism pattern 232.

The protection sheet 240 is disposed on an upper side of the optical sheet 230. The protection sheet 240 is interposed between the optical sheet 230 and the display panel 310. The protection sheet 240 can protect the optical sheet 230 and can prevent the optical sheet 230 and the display panel 310 from being adhered to each other. The protection sheet 240 has a light diffusion function so that the protection sheet 240 improves brightness uniformity.

FIG, 3 is a cross-sectional view showing a protection sheet according to an exemplary embodiment of the present invention.

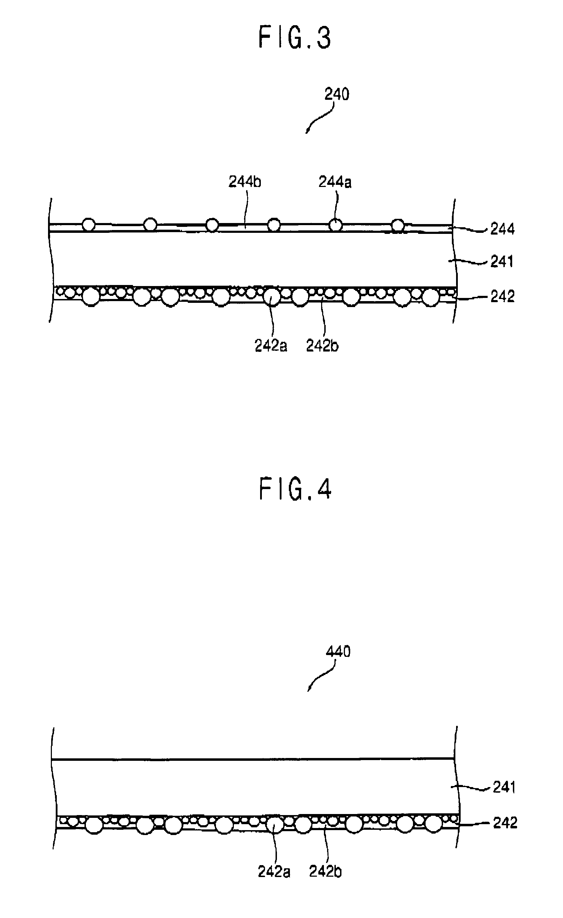

Referring to FIG,2 and FIG.3, the protection sheet 240 includes a base film 241, a diffusion layer 242, and a scratch protection layer 244.

The base film 241 may include transparent material to transmit light. The base film 241 may Include, for example, polyacrylate based material, polycarbonate based material, polysulfone based material, polystyrene based material, polyethylene base material, polyvinylchloride based material, polyvinyl alcohol based material, polyester based material, copolymer thereof, and/or a combination thereof. In an embodiment, the base film 241 may include polyethylene terephthalate (PET) based material.

The diffusion layer 242 is formed on a first side of the base film 241 facing the optical sheet 230. The diffusion layer 242 diffuses light transmitted through the optical sheet 230 so that brightness uniformity can be improved, The diffusion layer 242 prevents the protection sheet 240 from being adhered to the optical sheet 230, so that a defect, such as moire, can be prevented.

A thickness of the diffusion layer 242 may be in a range from about 5µm to about 100µm to diffuse light.

The diffusion layer 242 includes a plurality of first beads 242a to diffuse light and a first coating layer 242b to fix the plurality of first beads 242a.

The first beads 242a are distributed with a high distribution density on a first side of the base film 241. The first beads 242a may include, for example, an organic polymer material having a particle size which is in a range from about 5µm to about 100µm. The first beads 242a may include a material having a hardness, which is less or substantially the same as that of the optical sheet 230 to prevent scratches of the optical sheet 230. The first beads 242a may include, for example, polymethylemethacrylate (PMMA) and/or polycarbonate (PC).

The first coating layer 242b can fix the first beads 242a on the first side of the base film 241. The first coating layer 242b may include, for example, thermosetting resin cured by a thermal process and/or ultraviolet curable resin cured by ultraviolet rays.

The first beads 242a and the first coating layer 242b are mixed and deposited on the first side of the base film 241. Then, the first coating layer 242b is cured so that the diffusion layer 242 is formed.

A haze of the diffusion layer 242 may be in a range of from about 10% to about 90%.

The scratch prevention layer 244 is formed on a second side of the base film 241 facing the display panel 310. The scratch prevention layer 244 is formed on the second side of the base film 241 to prevent the protection sheet 240 from being adhered to the display panel 310, so that a defect, such as moire, can be prevented.

The scratch prevention layer 244 may include second beads 244a to prevent the scratch prevention layer 244 from being adhered to the display panel 310 and a second coating layer 244b to fix the second beads 244a. In an embodiment, the second coating layer 244b may be thinner than a diameter of the second beads 244a. A thickness of the scratch prevention layer 244 may be substantially the same as the diameter of the second beads 244a.

The number and properties of the second beads 244a can prevent scratches caused by a friction between the display panel 310 and the second beads 244a. In an embodiment, the second beads 244a can be distributed in a relatively low density. For example, the second beads 244a can be distributed on the second side of the base film 241 in a lower density than that of the first beads 242a in the diffusion layer 242.

The second beads 244a may Include a transparent spherical particle. The second beads 244a may have a diameter of about 1µm to about 10µm, which is smaller than a diameter of the first beads 242a.

The thickness of the scratch prevention layer 244 may be substantially the same as the diameter of the second beads 244a. The thickness of the scratch prevention layer 244 may be in a range from about 1 µm to about 10 µm.

The second beads 244a may include a material having hardness less than that of a lower side of the display panel 310 to further prevent the scratches caused by friction generated between the second beads 244a and the display panel 310. The second beads 244a may include, for example, polymethyl methancrylate (PMMA) and/or polycarbonate (PC).

The second coating layer 244b can fix the second beads 244a on the second side of the base film 241. The second coating layer 244b may include, for example, a thermosetting resin cured by a thermal process and/or an ultraviolet curable resin cured by ultraviolet rays.

The second coating layer 244b may include one or more kinds of silicon based compounds or a mixture thereof. When the silicon based compound is added to the second coating layer 244b, a surface of the scratch prevention layer 244 may be smooth.

FIG. 4 is a cross-sectional view showing a protection sheet according to an exemplary embodiment of the present invention.

Referring to FIG.2 and FIG,4, a protection sheet 440 may include the base film 241 and the diffusion layer 242 formed on the first side of the base film 241 facing the optical sheet 230.

The protection sheet 240 shown in FIG, 3 includes the scratch prevention layer 244 formed on the second side of the base film 241 facing the display panel 310. The protection sheet 440 according to an exemplary embodiment of the present invention does not include the scratch prevention layer 244,

When the scratch prevention layer 244 is not formed on the second side of the base film 241 contacting the display panel 310, the second side of the base film 241 having a flat surface contacts the display panel 310 so that the scratch prevention effect may be further improved.

Table 1 is a comparative table showing test results of optical characteristics and reliability of a protection sheet according exemplary embodiments of the present invention.

**<Table 1>**

| | Comparative embodiment | Embodiment 1 | Embodiment 2 |
|---|---|---|---|
| Haze | 42,5% | 43.6% | 42.0% |
| Average brightness | Standard | -0,2% | 0.3% |
| Result of Vibration test | Split occurrence | Good | Good |

A first side of a base film refers to a side facing an optical sheet, and a second side of a base film refers to a side facing a display panel.

In Table 1, the Comparative embodiment represents a structure of the protection sheet including a scratch prevention layer formed on the first side of the base film and a diffusion layer formed on the second side of the base film, Embodiment 1 represents a structure of the protection sheet described in connection with FIG. 3 including a diffusion layer formed on the first side of the base film and the scratch prevention layer formed on the second side of the base film. Embodiment 2 represents a structure of the protection sheet described in connection with FIG, 4 Including a diffusion layer formed the first side of the base film. In Embodiment 2, the scratch prevention layer is not formed on the second side of the base film.

Referring to Table 1, in an aspect of the average brightness, when the protection sheet according to Embodiment 1 or 2 is used, the average brightness is substantially similar to the Comparative embodiment in which a conventional protection sheet is used.

In the result of the vibration test, the split phenomenon is observed by a scratch in samples corresponding to the Comparative embodiment. However, when the protection sheet according to Embodiment 1 or 2 is used, the split phenomenon is not observed.

When the protection sheet according to Embodiment 1 or 2 is used, the split phenomenon caused by the scratches can be prevented, When compared to the conventional protection sheet, substantially the same optical characteristics can be gained.

Referring to FIG.1 and FIG.2, the backlight assembly may further include a reflective sheet 250 disposed behind the light guide plate 220. The reflective sheet 250 can improve efficiency of light by reflecting light leaked from the light guide plate 220 back toward the light guide plate 220, The reflective sheet 250 may include a material having high reflectivity. The reflective sheet 250 may include, for example, white polyethylene terephthalate (PET) and/or polycarbonate (PC),

The display unit 300 is disposed over the backlight assembly 200. The display unit 300 displays an image by using light provided from the backlight assembly 200. The display unit 300 may include the display panel 310 disposed over the protection sheet 240 and a driving circuit part 320 to drive the display panel 310.

The display panel 310 is disposed over the protection sheet 240. The display panel 310 may include a lower substrate 312, an upper substrate 314 facing the lower substrate 312, and a liquid crystal layer (not shown) interposed between the lower substrate 312 and the upper substrate 314.

The lower substrate 312 is a thin film transistor (TFT) substrate including the TFT arranged in a matrix. The TFT acts as a switching element. A source electrode and a gate electrode of the TFT are connected to a data line and a gate line, respectively. A drain electrode of the TFT is connected to a pixel electrode including a transparent conductive material.

The upper substrate 314 is a color filter substrate including a red color filter, a blue color filter and a green color filter to display a color image, A common electrode Including a transparent conductive material is formed on the upper substrate 314. The color filter may be formed on the lower substrate 312,

When power is applied to the gate electrode of the TFT and thus the TFT is turned on, an electric field is generated between the pixel electrode and the common electrode. An arrangement of liquid crystal molecules of the liquid crystal layer interposed between the lower substrate 312 and the upper substrate 314 varies in response to the electric field, so that transmittance of light generated from the backlight assembly 200 is changed. Accordingly, a desired image can be displayed.

The driving circuit part 320 may include a source printed circuit board 322 for outputting control signals to drive the display panel 310, a data driving circuit film 324 connecting the source printed circuit board 322 with the display panel 310, and a gate driving circuit film 326 connected to the display panel 310.

The data driving circuit film 324 is connected to the data line of the lower substrate 312. The gate driving circuit film 326 is connected to the gate line of the lower substrate 312.

The data driving circuit film 324 and the gate driving circuit film 326 may include a driving chip. The driving chip outputs a driving signal to the display panel 310 in response to the control signals supplied from the source printed circuit board 322. The data driving circuit film 324 and the gate driving circuit board 326 may include, for example, a tape carrier package (TCP) and/or a chip on film (COF).

The driving circuit part 320 may further include a gate printed circuit board connected to the gate driving circuit film 326.

According to exemplary embodiments of the present invention, scratches caused by friction produced between a display panel and a protection layer can be prevented, so that a display quality can be improved.

Although the illustrative embodiments of the present invention have been described herein with reference to the accompanying drawings, it is to be understood that the present invention should not be limited to those precise embodiments and that various other changes and modifications may be affected therein by one of ordinary skill in the related art without departing from the scope or spirit of the invention. All such changes and modifications are intended to be included within the scope of the invention as defined by the appended claims,

## Claims

1. A backlight assembly comprising:
a light generating unit;
a light guide plate;
at least one optical sheet disposed over the light guide plate; and
a protection sheet disposed over the optical sheet, wherein the protection sheet includes a diffusion layer formed on a first side of the protection sheet facing the optical sheet.

2. The backlight assembly of claim 1, wherein the diffusion layer has a thickness in a range from about 5µm to about 100µm.

3. The backlight assembly of claim 1, wherein the diffusion layer comprises:
a plurality of first beads to diffuse light; and
a first coating layer to fix the plurality of first beads.

4. The backlight assembly of claim 3, wherein the diffusion layer has a haze in a range from about 10% to about 90%.

5. The backlight assembly of claim 1, wherein the protection sheet comprises a scratch prevention layer formed on a second side located opposite the first side,

6. The backlight assembly of claim 5, wherein the scratch prevention layer has a thickness in a range from about 1µm to about 10µm.

7. The backlight assembly of claim 6, wherein the scratch prevention layer comprises:
a plurality of second beads; and
a second coating layer to fix the plurality of second beads.

8. The backlight assembly of claim 7, wherein the plurality of second beads have a diameter in a range from about 1µm to about 10µm.

9. The backlight assembly of claim 7, wherein the second coating layer comprises a silicon based compound.

10. The backlight assembly of claim 1, wherein the light guide plate comprises a first prism pattern formed on a lower side of the light guide plate.

11. The backlight assembly of claim 10, wherein the optical sheet comprises a reverse prism sheet including a second prism pattern formed on a side facing the light guide plate.

12. The backlight assembly of claim 1, further comprising a reflective sheet disposed behind the light guide plate.

13. A backlight assembly comprises:
a light generating unit;
a light guide plate;
at least one optical sheet disposed over the light guide plate; and
a protection sheet disposed over the optical sheet, the protection sheet comprising:
a diffusion layer formed on a first side facing the optical sheet, the diffusion layer having a thickness In a range from about 5µm to about 100 µm; and
a scratch prevention layer formed on a second side located opposite the first side, the scratch prevention layer having a thickness in a range from about 1µm to about 10µm.

14. The backlight assembly of claim 13, wherein the diffusion layer has a haze in a range of from about 10% to about 90% and comprises:
a plurality of first beads to diffuse light; and
a first coating layer to fix the plurality of first beads.

15. The backlight assembly of claim 14, wherein the scratch prevention layer comprises:
a plurality of second beads having a smaller distribution density than a distribution density of the first beads; and
a second coating layer to fix the plurality of second beads,

16. The backlight assembly of claim 13, wherein the light guide plate comprises a first prism pattern formed on a lower side of the light guide plate, and the optical sheet comprises a reverse prism sheet having a second prism pattern formed on a side facing the light guide plate.

17. A display device, comprising:
a display panel; and
a protection sheet disposed adjacent to the display panel, the protection sheet comprising:
a first side adjacent to the display panel;
a second side located opposite the first side; and
a diffusion layer formed on the second side, the diffusion layer having a thickness in a range from about 5µm to about 100µm.

18. The display device of claim 17, wherein the diffusion layer has a haze in a range from 10% to about 90% and comprises:
a plurality of first beads to diffuse light; and
a first coating layer to fix the plurality of first beads.

19. The display device of claim 18, wherein the protection sheet further comprises a scratch prevention layer having a thickness in a range from about 1µm to about 10µm and formed on the first side adjacent to the display panel,

20. The display device of claim 19, wherein the scratch prevention layer comprises:
a plurality of second beads having a diameter in a range from about 1µm to about 10µm , the plurality of second beads having a smaller distribution density than a distribution density of the first beads; and
a second coating layer to fix the plurality of second beads,

21. The display device of claim 20, further comprising a reverse prism sheet disposed adjacent to the second side of the protection sheet, wherein the reverse prism sheet comprises;
a third side adjacent to the protection sheet:
a fourth side located opposite the third side; and
a reverse prism sheet including a prism pattern formed on the fourth side.
